(19) Europäisches Patentamt
European Patent Office
Office européen des brevets

(11) Veröffentlichungsnummer: **0 439 054 A1**

# (12) EUROPÄISCHE PATENTANMELDUNG

(21) Anmeldenummer: **91100490.1**

(22) Anmeldetag: **17.01.91**

(51) Int. Cl.[5]: **C09B 29/085**, C09B 67/22, D06P 1/18

(30) Priorität: **22.01.90 DE 4001670**

(43) Veröffentlichungstag der Anmeldung: **31.07.91 Patentblatt 91/31**

(84) Benannte Vertragsstaaten: **CH DE FR GB IT LI**

(71) Anmelder: **CASSELLA Aktiengesellschaft**
**Hanauer Landstrasse 526**
**W-6000 Frankfurt am Main 61(DE)**

(72) Erfinder: **Bühler, Ulrich, Dr.**
**Kastanienweg 8**
**W-8755 Alzenau(DE)**
Erfinder: **Kühn, Reinhard**
**Heinrich-Bleicher-Strasse 39**
**W-6000 Frankfurt am Main 50(DE)**

(74) Vertreter: **Urbach, Hans-Georg, Dr. et al**
**CASSELLA AKTIENGESELLSCHAFT**
**Patentabteilung Hanauer Landstrasse 526**
**W-6000 Frankfurt am Main 61(DE)**

## (54) Monoazofarbstoffe, ihre Herstellung und Verwendung.

(57) Die vorliegende Erfindung betrifft neue wertvolle, von ionogenen Gruppen freie Azofarbstoffe der allgemeinen Formel I

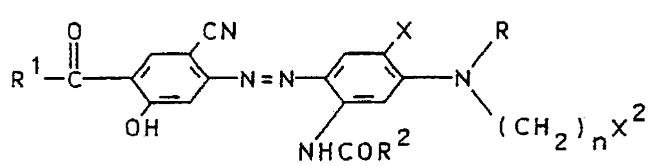

(I)

worin R, $R^1$, $R^2$, X, $X^2$ und n die in Anspruch 1 angegebenen Bedeutungen haben, Mischungen von Farbstoffen der allgemeinen Formel I, die Herstellung von Farbstoffen der allgemeinen Formel I sowie ihre Verwendung zum Färben und Bedrucken von hydrophoben Fasermaterialien.

EP 0 439 054 A1

# MONOAZOFARBSTOFFE, IHRE HERSTELLUNG UND VERWENDUNG

Die vorliegende Erfindung betrifft neue wertvolle, von ionogenen Gruppen freie Azofarbstoffe der allgemeinen Formel I

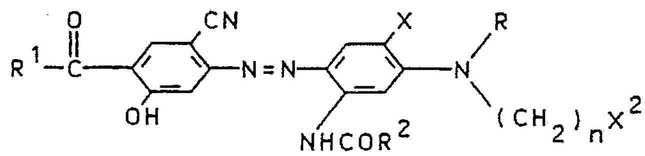

(I)

in der

| | |
|---|---|
| $R^1$ | Methyl oder Ethyl, |
| $R^2$ | Alkyl mit 1 bis 3 C-Atomen, das durch Methoxy oder Ethoxy substituiert sein kann, |
| R | $(CH_2)_mX^1$ oder, wenn X Chlor ist, Wasserstoff, |
| x | Wasserstoff oder Chlor, |
| $X^1$ | $COOR^3$ oder Cyan, |
| $X^2$ | $COOR^3$, Cyan, $OCOR^4$, $OCOOR^3$, Alkoxy mit 1 bis 4 C-Atomen, das durch Cyan substituiert sein kann, Alkoxyalkoxy mit insgesamt bis zu 6 C-Atomen, Hydroxy, Chlor oder Brom, |
| $R^3$ | Alkyl mit 1 bis 4 C-Atomen, das durch Alkoxy mit 1 bis 4 C-Atomen, Chlor, Brom oder Cyan substituiert sein kann, oder Alkenyl mit 3 oder 4 C-Atomen, |
| $R^4$ | Methyl oder Ethyl, |
| m und n | 2 oder 3 |

bedeuten.

Die Erfindung betrifft auch Mischungen von Farbstoffen der allgemeinen Formel I sowie die Herstellung dieser Farbstoffe und ihrer Mischungen und ihre Verwendung zum Färben und Bedrucken von hydrophoben Fasermaterialien.

Den erfindungsgemäßen Farbstoffen ähnliche sind z.B. in der EP 73 875 bereits beschrieben. Es wurde jedoch überraschenderweise gefunden, daß die erfindungsgemäßen Farbstoffe diesen bekannten Farbstoffen im färberischen Verhalten auf verschiedenen Substraten sowie bei einigen Gebrauchsechtheiten, wie Thermomigrierechtheit, Wasserechtheit, Thermofixierechtheit, Lichtechtheit und Lösungsmittelechtheit deutlich überlegen sind.

Alkylgruppen mit 1 bis 3 C-Atomen bzw. 1 bis 4 C-Atomen, die für $R^2$ bzw. $R^3$ stehen können, sind beispielsweise Methyl, Ethyl, n-Propyl, i-Propyl, n-Butyl, i-Butyl und sek-Butyl. Alkoxygruppen mit 1 bis 4 C-Atomen, die für $X^2$ stehen können bzw. mit denen für $R^3$ stehende Alkylgruppen mit 1 bis 4 C-Atomen substituiert sein können, sind beispielsweise Methoxy, Ethoxy, n-Propoxy, i-Propoxy, n-Butoxy, i-Butoxy, sek-Butoxy.

Alkoxyalkoxygruppen mit bis zu 6 C-Atomen, die für $X^2$ stehen können, sind beispielsweise 2-Methoxyethoxy, 2-Ethoxyethoxy, 2-n-Propoxyethoxy, 2-n-Butoxyethoxy, 3-Methoxypropoxy, 3-Ethoxypropoxy, 4-Methoxybutoxy, 4-Ethoxybutoxy, 2-Methoxypropoxy, 2-Ethoxypropoxy. X bedeutet bevorzugt Wasserstoff.

Ein bevorzugter Rest $R^1$ ist Methyl. Bevorzugte Reste $R^2$ sind Methyl und Ethyl. Ein bevorzugter Rest $X^1$ ist $COOR^3$. Bevorzugte Reste $X^2$ sind Cyan, $OCOR^4$, $OCOOR^3$, Methoxy, Ethoxy, 2-Methoxyethoxy, 2-Ethoxyethoxy, 2-Cyanethoxy und insbesondere $COOR^3$. Bevorzugte Reste $R^3$ sind Methyl und Ethyl. Bevorzugt sind m oder n 2 und insbesondere m und n 2. Besonders bevorzugte Reste $X^1$ und $X^2$ sind $COOCH_3$. R bedeutet bevorzugt $(CH_2)_2COOCH_3$.

Besonders bevorzugte Farbstoffe der allgemeinen Formel I sind solche mit mehreren bevorzugten Resten $R^1$, $R^2$, $X^1$, $X^2$, $R^3$, m und n.

Die Herstellung der erfindungsgemäßen Farbstoffe der allgemeinen Formel I erfolgt beispielsweise dadurch, daß man eine Diazokomponente der allgemeinen Formel II

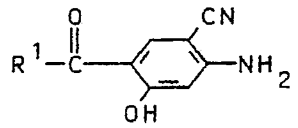

(II)

worin $R^1$ wie oben angegeben definiert ist, in an sich bekannter Weise diazotiert und auf eine Kupplungskomponente der allgemeinen Formel III

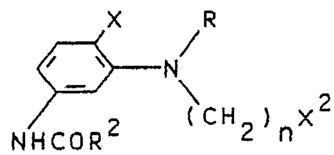

(III)

worin X, $X^2$, R, $R^2$ und n wie oben angegeben definiert sind, kuppelt, wie es z.B. in der oben genannten EP 73 875 beschrieben wird. Auch auf die Synthese der Diazokomponenten der allgemeinen Formel II wird dort hingewiesen. Die Herstellung der Kupplungskomponenten erfolgt nach dem Fachmann bekannten Methoden.

In den erfindungsgemäßen Farbstoffmischungen aus Farbstoffen der allgemeinen Formel I kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70 : 30 bis 30 : 70 bevorzugt, d.h. der Gewichtsanteil eines Farbstoffs beträgt 30 bis 70 %.

Die erfindungsgemäßen Mischungen können hergestellt werden durch Mischen der separat hergestellten und gefinishten Einzelfarbstoffkomponenten. Dieses Mischen kann in geeigneten Mischern oder Mühlen oder aber durch Einrühren in die Färbeflotte geschehen. Es ist aber bevorzugt, die separat hergestellten Einzelfarbstoffkomponenten gemeinsam zu finishen, wobei das Mischen bei der Herstellung von Farbstoffpulvern unmittelbar vor dem Sprühtrocknen, bei Farbstoffpulvern und flüssigen Farbstoffpräparationen, vorzugsweise vor dem Aufmahlen, erfolgen kann. Besonders bevorzugt ist hierbei eine gemeinsame thermische Stabilisierung vor dem Aufmahlen.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1/_2$-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 80 bis 230 °C fixiert wird. Das Bedrucken der genannten Materialien Kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Thermomigrier-, Thermofixier-, Wasser- und Lichtechtheit und einer geringen pH- und Reduktionsempfindlichkeit.

Bei der Verwendung im Ätz- und Reservedruck, wie er z.B. in Rev. Prog. Coloration Vol. 18, S.29 ff., (1988), beschrieben ist, insbesondere im alkalischen Ätzreservedruck, erhält man Drucke mit sehr gutem

Weiß- bzw. Buntfond mit scharfen Konturen.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 $\mu$m, vorzugsweise bei etwa 1 $\mu$m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen Können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele weiter erläutert. Prozentangaben sind Gewichtsprozente, Teile sind Gewichtsteile.

Beispiel 1

a) 17,6 g 4-Amino-2-hydroxy-5-cyanoacetophenon werden in 100 ml Eisessig bei 10 bis 15 °C mit 33,4 g 40%iger Nitrosylschwefelsäure diazotiert und bei 0 bis 5 °C auf eine wäßrige essigsaure Lösung von 35,4 g N-Acetyl-N',N'-bis-(2-methoxycarbonylethyl)-phenylendiamin-1,3 unter direkter Kühlung mit 1000 g Eiswasser gekuppelt. Nach beendeter Kupplung wird der entstandene Farbstoff abgesaugt, mit Wasser gewaschen und unter vermindertem Druck getrocknet. Es werden erhalten: 48,2 g des Farbstoffs der Formel

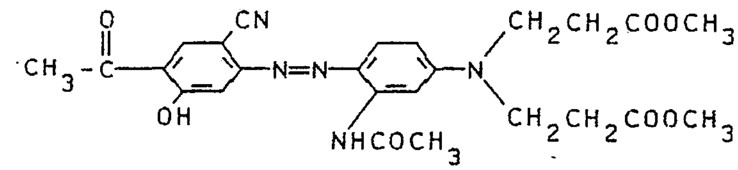

der sich in o-Dichlorbenzol mit roter Farbe löst und bei 519 nm sein Absorptionsmaximum hat.

b) In einem praxisüblichen Finishprozeß wird dieser Farbstoff durch wäßrige Mahlung in einer Perlmühle mit einem praxisüblichen Dispergiermittel auf Basis Ligninsulfonat in eine flüssige Farbstoffpräparation überführt, die 10 % Reinfarbstoff enthält.

c) 6 g der so erhaltenen Farbstoffpräparation werden in 2000 g Wasser dispergiert. Die Dispersion wird mit 3,6 ml 85%iger Phosphorsäure versetzt, mit Natronlauge auf einen pH-Wert von 4,5 eingestellt und mit 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130 °C. Nach anschließendem Spülen, reduktivem Nachbehandeln mit einer 0,2%igen wäßrigen Natriumdithionitlösung während 15 min bei 70 bis 80 °C, Spülen und Trocknen erhält man eine farbstarke klare rote Färbung mit sehr guten coloristischen Eigenschaften, insbesondere sehr guter Thermofixier-, Thermomigrier- und Waschechtheit.

Beispiel 2

a) Werden in Beispiel 1a) die 35,4 g N-Acetyl-N',N'-bis-(2-methoxycarbonylethyl)-phenylendiamin-1,3 durch 31,8 g N-Acetyl-N'-(2-acetoxyethyl)-N'-(2-cyanethyl)-phenylendiamin ersetzt, so erhält man 44,0 g des Farbstoffs der Formel

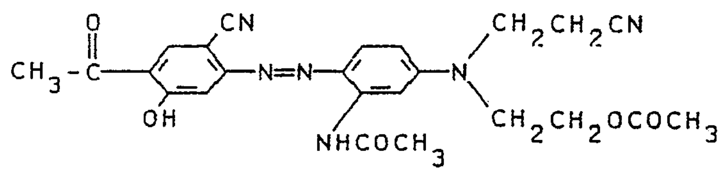

der sich in o-Dichlorbenzol mit roter Farbe löst und bei 505 nm sein Absorptionsmaximum hat.

b) In einem praxisüblichen Finishprozeß wird dieser Farbstoff, wie in Beispiel 1b) beschrieben, in Gegenwart von Dispergiermitteln wäßrig aufgemahlen und dann einer Sprühtrocknung unterworfen. Auf diese Weise erhält man eine pulverförmige Farbstoffpräparation mit einem Gehalt an Reinfarbstoff von 20 %. Mit 3 g dieser Farbstoffpräparation wird, wie in Beispiel 1c) beschrieben, eine Färbeflotte hergestellt und darin 45 min bei 150 °C 100 g eines Polyester-Zellwolle-Mischgewebes (70 : 30) gefärbt und die Färbung wie in Beispiel 1c) fertiggestellt. Anschließend wird diese Färbung einer Kunstharzausrüstung unterworfen. Dazu wird die Färbung mit einer Klotzflotte, die 40 g/l eines Reaktantharzes auf Basis Dimethylol-dihydroxyethylenharnstoff, 20 g/l eines Melamin-Harzes, 20 g/l einer Polyethylenemulsion, 20 g/l eines Weichmachers auf Silikonbasis und 8 g/l eines Aminsalzes enthält, geklotzt, 1 min bei 100 °C getrocknet und 30 sek. bei 180 °C kondensiert. Die so ausgerüstete Färbung wird in Gegenwart eines Mehrfaserbandes einer Waschechtheitsprüfung gemäß der M + S-Spezifikation C4A unterzogen. Dabei wird das Mehrfaserband praktisch nicht angeschmutzt.

Beispiel 3

Werden analog den Angaben in Beispiel 1 die 17,6 g 4-Amino-2-hydroxy-5-cyanoacetophenon diazotiert und auf 36,8 g N-Propionyl-N',N'-bis(2-methoxycarbonylethyl)-phenylendiamin-1,3gekuppelt, so erhält man 50,5 g des Farbstoffs der Formel

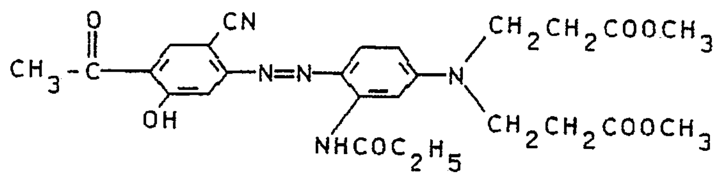

der sich in o-Dichlorbenzol mit roter Farbe löst und bei 519 nm sein Absorptionsmaximum hat.

Analog den Beispielen 1 bis 3 lassen sich die erfindungsgemäßen Farbstoffe der folgenden Tabelle 1 herstellen. Sie färben hydrophobe Fasern ebenfalls in vollen roten Nuancen mit ausgezeichneten Echtheiten.

TABELLE 1

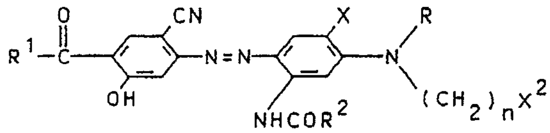

| Bsp. | $R^1$ | $R^2$ | X | R | n | $X^2$ |
|---|---|---|---|---|---|---|
| 4 | $CH_3$ | $iC_3H_7$ | H | $(CH_2)_2COOCH_3$ | 2 | $COOCH_3$ |
| 5 | $CH_3$ | $nC_3H_7$ | H | $(CH_2)_2COOCH_3$ | 2 | $COOCH_3$ |
| 6 | $CH_3$ | $CH_3$ | H | $(CH_2)_2COOC_2H_5$ | 2 | $COOCH_3$ |
| 7 | $CH_3$ | $C_2H_5$ | H | $(CH_2)_2COOC_2H_5$ | 2 | $COOCH_3$ |
| 8 | $CH_3$ | $nC_3H_7$ | H | $(CH_2)_2COOC_2H_5$ | 2 | $COOCH_3$ |
| 9 | $CH_3$ | $CH_3$ | H | $(CH_2)_2COOC_2H_5$ | 2 | $COOC_2H_5$ |
| 10 | $CH_3$ | $C_2H_5$ | H | $(CH_2)_2COOC_2H_5$ | 2 | $COOC_2H_5$ |
| 11 | $CH_3$ | $CH_3$ | H | $(CH_2)_2COOnC_3H_7$ | 2 | $COOCH_3$ |
| 12 | $CH_3$ | $CH_3$ | H | $(CH_2)_2COOiC_3H_7$ | 2 | $COOCH_3$ |
| 13 | $CH_3$ | $CH_3$ | H | $(CH_2)_2COOCH_2CH=CH_2$ | 2 | $COOCH_3$ |
| 14 | $CH_3$ | $C_2H_5$ | H | $(CH_2)_2COO(CH_2)_2OCH_3$ | 2 | $COOCH_3$ |
| 15 | $CH_3$ | $CH_3$ | H | $(CH_2)_2COO(CH_2)_2OC_2H_5$ | 2 | $COO(CH_2)_2OC_2H_5$ |
| 16 | $CH_3$ | $CH_3$ | H | $(CH_2)_2COO(CH_2)_2CN$ | 2 | $COOC_2H_5$ |
| 17 | $CH_3$ | $C_2H_5$ | H | $(CH_2)_2COO(CH_2)_2Cl$ | 2 | $COOCH_3$ |
| 18 | $CH_3$ | $nC_3H_7$ | H | $(CH_2)_2COO(CH_2)_2CN$ | 2 | $COOCH_3$ |
| 19 | $CH_3$ | $CH_3$ | H | $(CH_2)_3COOCH_3$ | 3 | $COOCH_3$ |
| 20 | $CH_3$ | $C_2H_5$ | H | $(CH_2)_3COOC_2H_5$ | 3 | $COOC_2H_5$ |
| 21 | $CH_3$ | $C_2H_5$ | H | $(CH_2)_2COOCH_3$ | 2 | CN |
| 22 | $CH_3$ | $CH_3$ | H | $(CH_2)_2COOC_2H_5$ | 2 | CN |
| 23 | $CH_3$ | $C_2H_5$ | H | $(CH_2)_3COOCH_3$ | 2 | CN |
| 24 | $CH_3$ | $C_2H_5$ | H | $(CH_2)_2COOCH_3$ | 2 | $OCH_3$ |
| 25 | $CH_3$ | $CH_3$ | H | $(CH_2)_2COOCH_3$ | 2 | $OC_2H_5$ |
| 26 | $CH_3$ | $iC_3H_7$ | H | $(CH_2)_2COOCH_3$ | 2 | $OCOCH_3$ |
| 27 | $CH_3$ | $C_2H_5$ | H | $(CH_2)_2COOCH_3$ | 2 | $OCOC_2H_5$ |
| 28 | $CH_3$ | $CH_3$ | H | $(CH_2)_2COOCH_3$ | 2 | $O(CH_2)_2OCH_3$ |
| 29 | $CH_3$ | $nC_3H_7$ | H | $(CH_2)_2COOCH_3$ | 2 | $O(CH_2)_2CN$ |
| 30 | $CH_3$ | $nC_3H_7$ | H | $(CH_2)_2COOCH_3$ | 2 | OH |

| Bsp. | $R^1$ | $R^2$ | X | R | n | $X^2$ |
|---|---|---|---|---|---|---|
| 31 | $CH_3$ | $nC_3H_7$ | H | $(CH_2)_2COOCH_3$ | 2 | $OCOOCH_3$ |
| 32 | $CH_3$ | $CH_3$ | H | $(CH_2)_2COOCH_2CN$ | 2 | $OCOOC_2H_5$ |
| 33 | $CH_3$ | $C_2H_5$ | H | $(CH_2)_3COOCH_3$ | 2 | $OCH_3$ |
| 34 | $CH_3$ | $CH_3$ | H | $(CH_2)_3COOCH_3$ | 3 | $COOCH_3$ |
| 35 | $CH_3$ | $C_2H_5$ | H | $(CH_2)_2CN$ | 2 | $OCOCH_3$ |
| 36 | $CH_3$ | $CH_3$ | H | $(CH_2)_2CN$ | 2 | $OCOC_2H_5$ |
| 37 | $CH_3$ | $CH_3$ | H | $(CH_2)_2CN$ | 2 | $OCOOC_2H_5$ |
| 38 | $CH_3$ | $C_2H_5$ | H | $(CH_2)_2CN$ | 2 | $OCH_3$ |
| 39 | $CH_3$ | $CH_3$ | H | $(CH_2)_2CN$ | 2 | CN |
| 40 | $CH_3$ | $C_2H_5$ | H | $(CH_2)_2CN$ | 2 | CN |
| 41 | $CH_3$ | $nC_3H_7$ | H | $(CH_2)_2CN$ | 2 | CN |
| 42 | $CH_3$ | $iC_3H_7$ | H | $(CH_2)_2CN$ | 2 | $O(CH_2)_2OCH_3$ |
| 43 | $CH_3$ | $CH_3$ | H | $(CH_2)_3CN$ | 2 | $OCOCH_3$ |
| 44 | $CH_3$ | $C_2H_5$ | H | $(CH_2)_3CN$ | 3 | CN |
| 45 | $CH_3$ | $CH_2OCH_3$ | H | $(CH_2)_2COOCH_3$ | 2 | $COOCH_3$ |
| 46 | $CH_3$ | $CH_2OCH_3$ | H | $(CH_2)_2COOCH_3$ | 2 | $OCH_3$ |
| 47 | $CH_3$ | $CH_2OC_2H_5$ | H | $(CH_2)_2CN$ | 2 | $OCOCH_3$ |
| 48 | $CH_3$ | $CH_2OC_2H_5$ | H | $(CH_2)_2COOC_2H_5$ | 2 | $COOCH_3$ |
| 49 | $CH_3$ | $(CH_2)_2OCH_3$ | H | $(CH_2)_2COOC_2H_5$ | 2 | $COOC_2H_5$ |
| 50 | $CH_3$ | $(CH_2)_2OC_2H_5$ | H | $(CH_2)_2COOCH_3$ | 2 | $OCOOCH_3$ |
| 51 | $CH_3$ | $(CH_2)_3OCH_3$ | H | $(CH_2)_2COOCH_3$ | 2 | $COOCH_3$ |
| 52 | $CH_3$ | $CH_3$ | Cl | H | 2 | $COOCH_3$ |
| 53 | $CH_3$ | $C_2H_5$ | Cl | H | 2 | $COOCH_3$ |
| 54 | $CH_3$ | $CH_3$ | Cl | H | 2 | $COOC_2H_5$ |
| 55 | $CH_3$ | $iC_3H_7$ | Cl | H | 2 | $COOCH_3$ |
| 56 | $CH_3$ | $CH_3$ | Cl | H | 3 | $COOC_2H_5$ |
| 57 | $CH_3$ | $C_2H_5$ | Cl | H | 2 | CN |
| 58 | $CH_3$ | $CH_3$ | Cl | H | 3 | CN |
| 59 | $CH_3$ | $CH_2OCH_3$ | Cl | H | 2 | $COOCH_3$ |
| 60 | $CH_3$ | $(CH_2)_2OCH_3$ | Cl | H | 2 | $COOC_2H_5$ |
| 61 | $C_2H_5$ | $CH_3$ | H | $(CH_2)_2COOCH_3$ | 2 | $COOCH_3$ |
| 62 | $C_2H_5$ | $CH_3$ | H | $(CH_2)_2COOCH_3$ | 2 | $COOC_2H_5$ |
| 63 | $C_2H_5$ | $C_2H_5$ | H | $(CH_2)_2COOCH_3$ | 2 | $COOCH_3$ |

| Bsp. | $R^1$ | $R^2$ | X | R | n | $X^2$ |
|---|---|---|---|---|---|---|
| 64 | $C_2H_5$ | $CH_3$ | H | $(CH_2)_3COOCH_3$ | 2 | $COOCH_3$ |
| 65 | $C_2H_5$ | $nC_3H_7$ | H | $(CH_2)_2COOCH_3$ | 3 | $COOCH_3$ |
| 66 | $C_2H_5$ | $CH_3$ | H | $(CH_2)_2COO(CH_2)_2OCH_3$ | 2 | $COO(CH_2)_2OCH_3$ |
| 67 | $C_2H_5$ | $C_2H_5$ | H | $(CH_2)_2COO(CH_2)_2CN$ | 2 | $COO(CH_2)_2CN$ |
| 68 | $C_2H_5$ | $CH_3$ | H | $(CH_2)_2COOCH_3$ | 2 | CN |
| 69 | $C_2H_5$ | $C_2H_5$ | H | $(CH_2)_2COOCH_3$ | 2 | CN |
| 70 | $C_2H_5$ | $nC_3H_7$ | H | $(CH_2)_2COOCH_3$ | 2 | $OCH_3$ |
| 71 | $C_2H_5$ | $CH_3$ | H | $(CH_2)_3COOCH_3$ | 2 | CN |
| 72 | $C_2H_5$ | $CH_3$ | H | $(CH_2)_2COOCH_3$ | 2 | $OC_2H_5$ |
| 73 | $C_2H_5$ | $C_2H_5$ | H | $(CH_2)_2COOCH_3$ | 2 | $O(CH_2)_2OCH_3$ |
| 74 | $C_2H_5$ | $C_2H_5$ | H | $(CH_2)_2COOC_2H_5$ | 2 | $OCOCH_3$ |
| 75 | $C_2H_5$ | $CH_3$ | H | $(CH_2)_2COOCH_3$ | 2 | $OCOC_2H_5$ |
| 76 | $C_2H_5$ | $iC_3H_7$ | H | $(CH_2)_2COOCH_3$ | 2 | $OCOOCH_3$ |
| 77 | $C_2H_5$ | $C_2H_5$ | H | $(CH_2)_3COOCH_3$ | 2 | OH |
| 78 | $C_2H_5$ | $CH_2OCH_3$ | H | $(CH_2)_2COO(CH_2)_2OCH_3$ | 2 | $COO(CH_2)_2OCH_3$ |
| 79 | $C_2H_5$ | $CH_2OC_2H_5$ | H | $(CH_2)_2COOCH_2CH{=}CH_2$ | 2 | CN |
| 80 | $C_2H_5$ | $nC_3H_7$ | H | $(CH_2)_2CN$ | 2 | CN |
| 81 | $C_2H_5$ | $CH_3$ | H | $(CH_2)_2CN$ | 2 | CN |
| 82 | $C_2H_5$ | $CH_3$ | H | $(CH_2)_3CN$ | 3 | CN |
| 83 | $C_2H_5$ | $CH_3$ | H | $(CH_2)_3CN$ | 2 | $COOiC_4H_9$ |
| 84 | $C_2H_5$ | $CH_3$ | H | $(CH_2)_2COOCH_3$ | 2 | $O(CH_2)_2OC_2H_5$ |
| 85 | $C_2H_5$ | $CH_3$ | H | $(CH_2)_2COOCH_3$ | 2 | $(O(CH_2)_2)_2CH_3$ |
| 86 | $C_2H_5$ | $C_2H_5$ | Cl | H | 2 | CN |
| 87 | $C_2H_5$ | $CH_3$ | Cl | H | 2 | $COOCH_3$ |
| 88 | $C_2H_5$ | $CH_2OCH_3$ | Cl | H | 2 | $COOC_2H_5$ |
| 89 | $C_2H_5$ | $CH_3$ | Cl | H | 2 | $COO(CH_2)_2OCH_3$ |
| 90 | $C_2H_5$ | $iC_3H_7$ | Cl | H | 2 | $COOCH_3$ |
| 91 | $C_2H_5$ | $C_2H_5$ | Cl | H | 3 | $COOC_2H_5$ |
| 92 | $C_2H_5$ | $CH_3$ | Cl | H | 2 | $COOiC_3H_7$ |
| 93 | $C_2H_5$ | $C_2H_5$ | Cl | H | 2 | $COO(CH_2)_2CN$ |

In der folgenden Tabelle 2 sind erfindungsgemäße Farbstoffmischungen genannt.

TABELLE 2

| Bsp. | $R^1$ | $R^2$ | X | R | n | $X^2$ | Mischungsanteil |
|---|---|---|---|---|---|---|---|
| 94 | $CH_3$ | $CH_3$ | H | $(CH_2)_2COOCH_3$ | 2 | $COOCH_3$ | 50 % |
| | $CH_3$ | $nC_3H_7$ | H | $(CH_2)_2COOCH_3$ | 2 | $COOCH_3$ | 50 % |
| 95 | $CH_3$ | $CH_3$ | H | $(CH_2)_2COOCH_3$ | 2 | $COOCH_3$ | 70 % |
| | $CH_3$ | $CH_3$ | H | $(CH_2)_2COOC_2H_5$ | 2 | $COOC_2H_5$ | 30 % |
| 96 | $CH_3$ | $C_2H_5$ | H | $(CH_2)_2COOCH_3$ | 2 | $COOCH_3$ | 60 % |
| | $C_2H_5$ | $C_2H_5$ | H | $(CH_2)_2COOCH_3$ | 2 | $COOCH_3$ | 40 % |
| 97 | $CH_3$ | $C_2H_5$ | H | $(CH_2)_2COOCH_3$ | 2 | $COOCH_3$ | 90 % |
| | $CH_3$ | $C_2H_5$ | Cl | $(CH_2)_2COOCH_3$ | 2 | $COOCH_3$ | 10 % |
| 98 | $CH_3$ | $CH_3$ | H | $(CH_2)_2CN$ | 2 | $COOCH_3$ | 80 % |
| | $CH_3$ | $CH_3$ | H | $(CH_2)_3CN$ | 2 | $COOCH_3$ | 20 % |
| 99 | $CH_3$ | $C_2H_5$ | H | $(CH_2)_2COOCH_3$ | 2 | $COOCH_3$ | 60 % |
| | $CH_3$ | $C_2H_5$ | H | $(CH_2)_2COOCH_3$ | 3 | $COOCH_3$ | 20 % |
| | $CH_3$ | $C_2H_5$ | H | $(CH_2)_3COOCH_3$ | 3 | $COOCH_3$ | 20 % |
| 100 | $CH_3$ | $CH_3$ | H | $(CH_2)_2COOCH_3$ | 2 | CN | 40 % |
| | $CH_3$ | $nC_3H_7$ | H | $(CH_2)_2COOCH_3$ | 2 | $COOCH_3$ | 60 % |

**Patentansprüche**

**1.** Azofarbstoff der allgemeinen Formel I

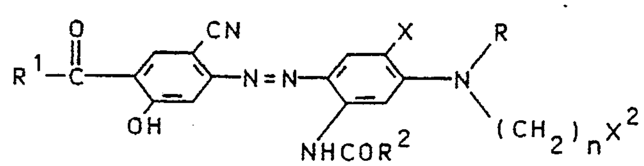

(I)

in der

| | |
|---|---|
| $R^1$ | Methyl oder Ethyl, |
| $R^2$ | Alkyl mit 1 bis 3 C-Atomen, das durch Methoxy oder Ethoxy substituiert sein kann, |
| R | $(CH_2)_mX^1$ oder, wenn X Chlor ist, Wasserstoff, |
| x | Wasserstoff oder Chlor, |
| $X^1$ | $COOR^3$ oder Cyan, |
| $X^2$ | $COOR^3$, Cyan, $OCOR^4$, $OCOOR^3$, Alkoxy mit 1 bis 4 C-Atomen, das durch Cyan substituiert sein kann, Alkoxyalkoxy mit insgesamt bis zu 6 C-Atomen, Hydroxy, Chlor oder Brom, |
| $R^3$ | Alkyl mit 1 bis 4 C-Atomen, das durch Alkoxy mit 1 bis 4 C-Atomen, Chlor, Brom oder Cyan substituiert sein kann, oder Alkenyl mit 3 oder 4 C-Atomen, |
| $R^4$ | Methyl oder Ethyl, |
| m und n | 2 oder 3 |

bedeuten.

**2.** Azofarbstoff nach Anspruch 1, dadurch gekennzeichnet, daß X für Wasserstoff steht.

**3.** Azofarbstoff nach Anspruch 1 und/oder 2, dadurch gekennzeichnet, daß $R^1$ für Methyl steht.

**4.** Azofarbstoff nach einem oder mehreren der Ansprüche 1 bis 3, dadurch gekennzeichnet, daß $R^2$ für Methyl oder Ethyl steht.

**5.** Azofarbstoff nach einem oder mehreren der Ansprüche 1 bis 4, dadurch gekennzeichnet, daß R für $(CH_2)_2COOCH_3$ steht.

**6.** Azofarbstoff nach einem oder mehreren der Ansprüche 1 bis 5, dadurch gekennzeichnet, daß $X^2$ für $COOCH_3$ steht.

**7.** Farbstoffmischung, dadurch gekennzeichnet, daß sie einen oder mehrere Azofarbstoffe der allgemeinen Formel I enthält.

**8.** Farbstoffmischung gemäß Anspruch 7, dadurch gekennzeichnet, daß der Gewichtsteil eines Farbstoffs der allgemeinen Formel I 10 bis 90 %, bevorzugt 30 bis 70 %, beträgt.

**9.** Verfahren zur Herstellung von Azofarbstoffen der allgemeinen Formel I, dadurch gekennzeichnet, daß man ein Amin der Formel II

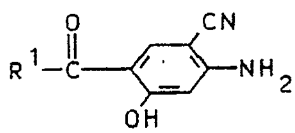

(II)

diazotiert und auf eine Kupplungskomponente der Formel III

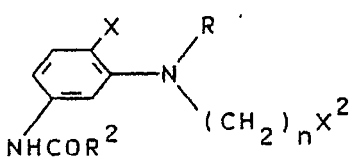

(III)

kuppelt, wobei $R^1$, $R^2$, R, X, $X^2$ und n die im Anspruch 1 angegebenen Bedeutungen haben.

**10.** Verwendung der Azofarbstoffe der Formel I oder deren Mischungen zum Färben und Bedrucken von hydrophoben Fasermaterialien.

Europäisches Patentamt

# EUROPÄISCHER RECHERCHENBERICHT

Nummer der Anmeldung

EP 91100490.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,X | EP - A2/A3 - 0 073 875 (CASSELLA AKTIENGESELLSCHAFT) * Seite 1, Zeile 1 - Seite 2, Zeile 21; Seite 4, Zeile 23 - Seite 5, Zeile 12; Seite 17 Zeilen 29-35; Seite 30, Zeile 3-9; Seite 33, Zeilen 20-36 * -- | 1-10 | C 09 B 29/085<br>C 09 B 67/22<br>D 06 P 1/18 |
| X | EP - A2/A3 - 0 038 615 (IMPERIAL CHEMICAL INDUSTRIES LIMITED) * Seite 1, Zeile 4 - Seite 4, Zeile 6; Seite 5, Zeile 12 - Seite 6, Zeile 10 * ---- | 1-6,9, 10 | |

| RECHERCHIERTE SACHGEBIETE (Int Cl 5) |
|---|
| C 09 B<br>D 06 P |

Der vorliegende Recherchenbericht wurde für alle Patentansprüche erstellt.

| Recherchenort | Abschlußdatum der Recherche | Prüfer |
|---|---|---|
| WIEN | 23-04-1991 | HAUSWIRTH |

KATEGORIE DER GENANNTEN DOKUMENTEN

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62